# EUROPEAN PATENT APPLICATION

(11) **EP 0 774 551 A1**
(43) Date of publication of application: **21.05.1997**
(21) Application number: 96308255.7
(22) Date of filing: 14.11.1996
(51) Int. Cl.: E04C 2/54

(54) **Plastic panel**

(30) Priority: 16.11.1995 IL 11603995
(71) Applicant: Polygal, Ramat Hashofet 19238 (IL)
(72) Inventor: Hakim, Gilad, Kibbutz Ramat Hashofet 19238 (IL); Benshahar, Aharon, Kibbutz Yifat 30069 (IL)
(74) Representative: Valentine, Francis Anthony Brinsley

(57) **Abstract**

A transparent or translucent plastics multiwall panel (10) includes at least one wall portion (24) which is formed of a first material which is generally opaque to non-visible IR (infra-red radiation). The panel may include a coloured layer 22 and/or a UV stabilizer layer (26). The layer(s) (24, 22, 26) are co-extruded with the base structure (12) of the panel.

## Description

### FIELD OF THE INVENTION

The present invention relates to transparent plastic panels generally.

### BACKGROUND OF THE INVENTION

Various types of transparent plastic panels are known in the art. These include plastic panels described in the U.S. patents 4,736,563 and 5,050,362; of the applicant/assignee.

Composite plastic materials having heat-screening functionality are known. The following U.S. Patents are believed to represent the state of the art: 5,434,197; 5,372,887; 5,140,768; 5,026,429; 4,895,904; 4,761,913; 4,423,164; 4,297,813; 4,296,568; 4,228,267; 4,179,547; 4,020,989; 3,911,620; 3,298,898.

### SUMMARY OF THE INVENTION

The present invention seeks to provide improved transparent plastic multiwall panels which have heat-screening functionality.

Throughout the specification and the claims the term "transparent" refers to both transparent and translucent.

There is thus provided in accordance with a preferred embodiment of the present invention a coextruded transparent plastic multiwall panel including at least one wall portion which is formed of a first material which is generally opaque to non-visible IR.

Preferably, the coextruded transparent panel also includes a thermally insulative portion formed of a second material and including at least one air gap.

The term "opaque" is used herein to refer to transmission of less than 20% of impinging radiation. The phrase "non-visible IR" is used herein to refer to the wavelength range of 750 - 2500 nm of electromagnetic radiation.

### BRIEF DESCRIPTION OF THE DRAWINGS

The present invention will be understood and appreciated more fully from the following detailed description, taken in conjunction with the drawing in which:
Fig. 1 is a simplified illustration of part of a composite coextruded transparent plastic sheet constructed and operative in accordance with a preferred embodiment of the present invention;
Fig. 2 is a simplified illustration of part of a composite coextruded transparent plastic sheet constructed and operative in accordance with another preferred embodiment of the present invention;
Fig. 3 is a simplified illustration of part of a composite coextruded transparent plastic sheet constructed and operative in accordance with yet another preferred embodiment of the present invention;
Fig. 4 is a simplified illustration of part of a composite coextruded transparent plastic sheet constructed and operative in accordance with still another preferred embodiment of the present invention; and
Fig. 5 is a simplified illustration of extrusion of a composite coextruded transparent plastic sheet constructed and operative in accordance with a preferred embodiment of the present invention.

### DETAILED DESCRIPTION OF PREFERRED EMBODIMENTS

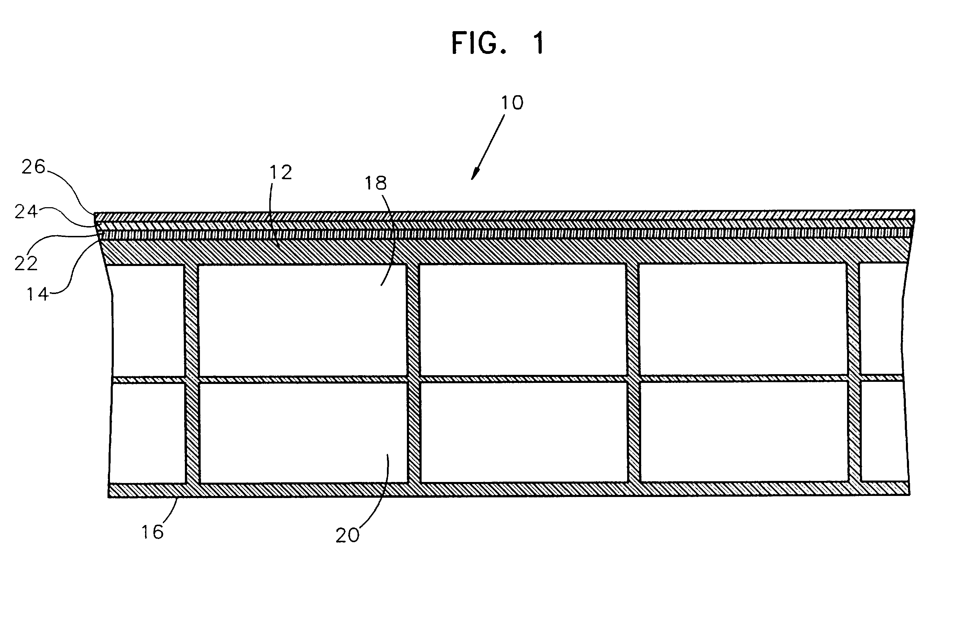

Reference is now made to Fig. 1, which is a simplified illustration of part of a composite coextruded transparent plastic sheet 10 constructed and operative in accordance with a preferred embodiment of the present invention. The coextruded transparent plastic sheet 10 comprises a base structure 12, typically formed of polycarbonate, having a solar facing surface 14 and an opposite interior facing surface 16. A double layer of air gaps 18 and 20 is formed between surfaces 14 and 16.

In accordance with a preferred embodiment of the invention, there is coextruded over the base structure 12, a colored layer 22, typically 0.020 - 0.200 mm thick. Coextruded over layer 22 is preferably a layer 24 of non-visible IR barrier, constructed of such components as metal oxide pigments, typically of thickness 0.020 - 0.200 mm. Coextruded over layer 24 is preferably a layer 26 of a UV stabilizer, such as benzotriazole, typically of thickness 0.010 - 0.100 mm.

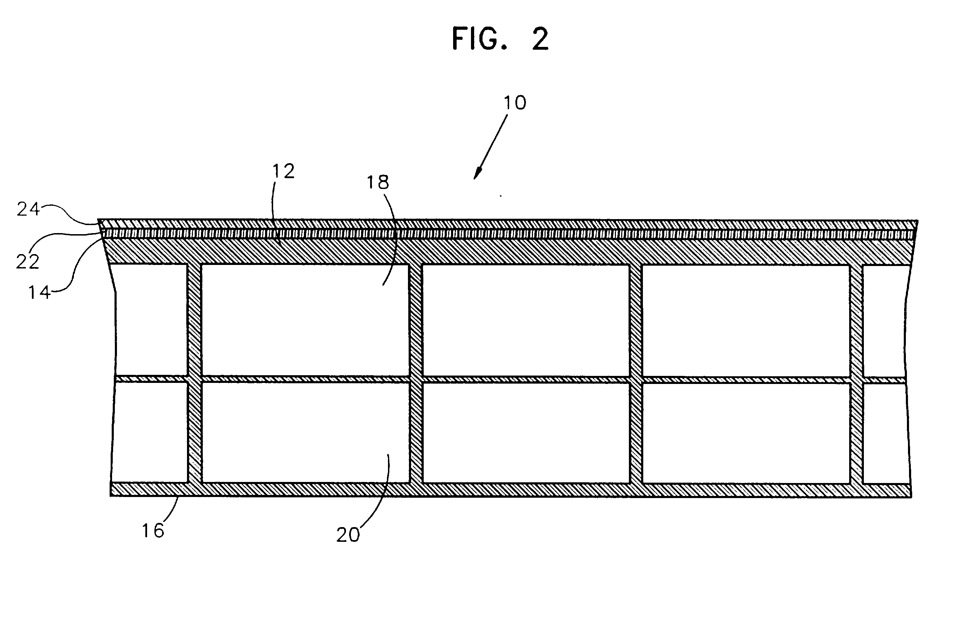

Fig. 2 illustrates a sheet identical to that of Fig. 1, but which does not include the UV stabilizer layer 26 (Fig. 1). The remainder of the sheet may be identical to that illustrated in Fig. 1 and described hereinabove and bears identical reference numbers.

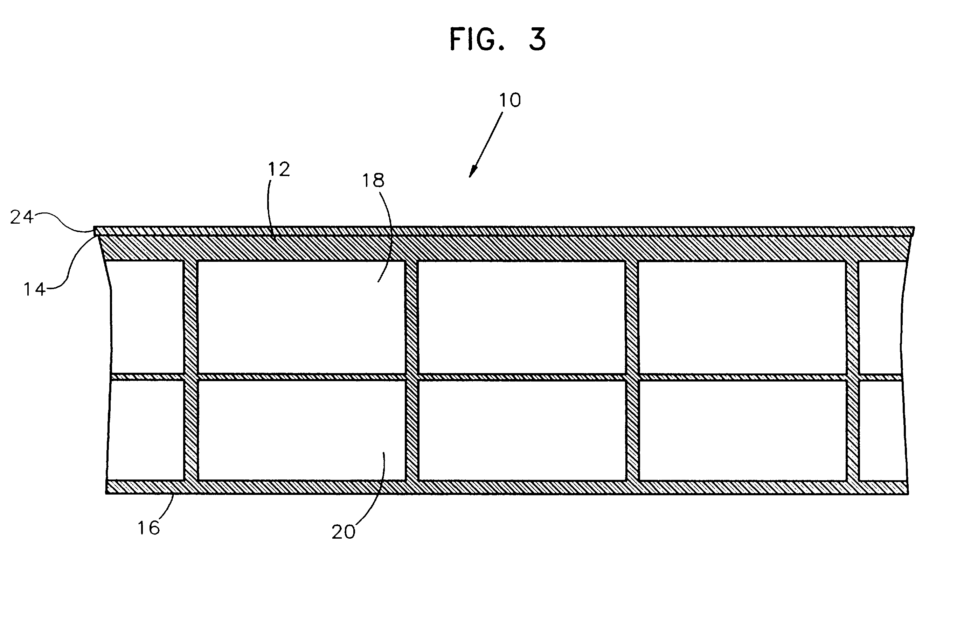

Fig. 3 illustrates a sheet identical to that of Fig. 1, but which does not include the colored and UV stabilizer layers 22 and 26. (Fig. 1). The remainder of the sheet may be identical to that illustrated in Fig. 1 and described hereinabove and bears identical reference numbers.

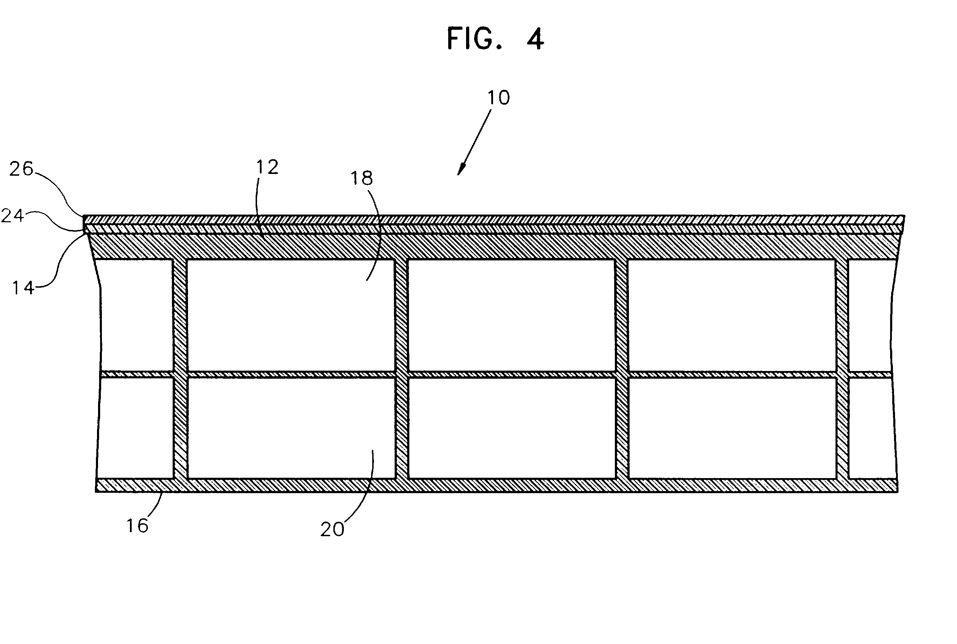

Fig. 4 illustrates a sheet identical to that of Fig. 1, but which does not include the colored layer 22 (Fig. 1). The remainder of the sheet may be identical to that illustrated in Fig. 1 and described hereinabove and bears identical reference numbers.

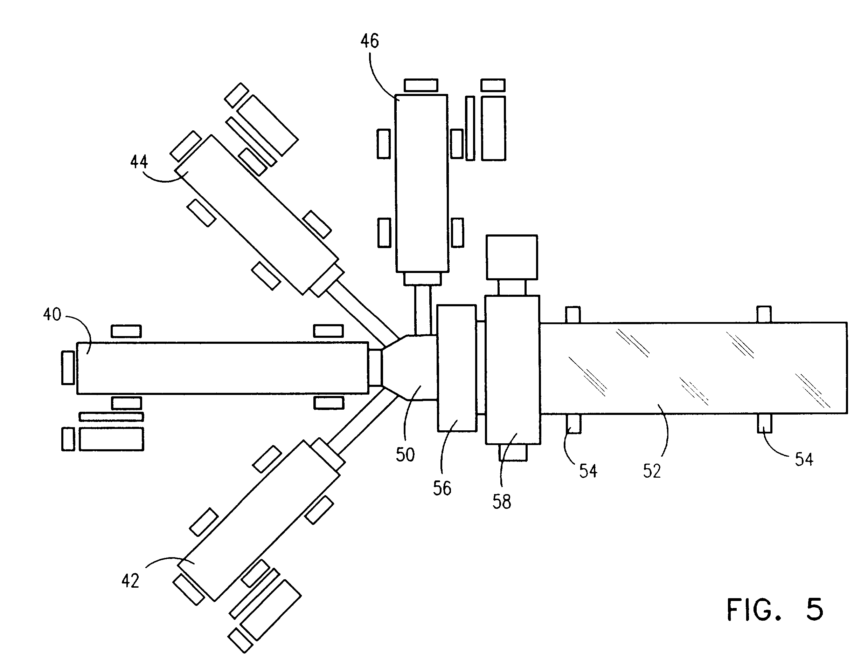

Reference is now made to Fig. 5, which illustrates a method of coextruding the composite layer shown in any of Figs. 1 - 4. A main extruder 40 receives a base resin, such as polycarbonate. Additional extruders, typically three in number and designated by reference numerals 42, 44 and 46 extrude additional materials, such as IR barrier, UV stabilizer and colored polycarbonate. The outputs of the various extruders are joined to each other in a coextrusion head 50 and a coextrusion die 56. A resulting composite sheet 52 leaves the coextrusion die 56 and is further configured by calibrator 58 and supported by rollers 54.

It will be appreciated by persons skilled in the art that the present invention is not limited by what has been particularly shown and described hereinabove. Rather the scope of the present invention is defined only by the claims which follow:

## Claims

1. A coextruded transparent plastic multiwall panel including at least one wall portion which is formed of a first material which is generally opaque to non-visible IR.

2. A panel according to claim 1 and also including a colored layer formed of a second material.

3. A panel according to either of claims 1 and 2 and also including at least one layer of a third material which has UV stabilizing properties and is coextruded therewith.
